# EUROPÄISCHE PATENTSCHRIFT

(11) **EP 3 705 855 B1**
(45) Veröffentlichungstag und Bekanntmachung des Hinweises auf die Patenterteilung: **12.04.2023**
(21) Anmeldenummer: 20160090.5
(22) Anmeldetag: 28.02.2020
(51) Int. Cl.: G01F 15/075, E03B 7/07, E03C 1/122, G01D 4/00, G01D 9/00, G06Q 50/06

(54) **VERFAHREN ZUR BESTIMMUNG VON FLÜSSIGKEITSVERBRÄUCHEN EINER MEHRZAHL VON FLÜSSIGKEITSVERBRAUCHERN**
METHOD FOR DETERMINING LIQUID CONSUMPTION OF A PLURALITY OF LIQUID CONSUMERS
PROCÉDÉ DE DÉTERMINATION DES CONSOMMATIONS DE LIQUIDE D'UNE PLURALITÉ DE CONSOMMATEURS DE LIQUIDE

(30) Priorität: 08.03.2019 DE 102019105946
(43) Veröffentlichungstag der Anmeldung: 09.09.2020
(73) Patentinhaber: Grohe AG, 58653 Hemer (DE)
(72) Erfinder: FISCHER, Timo, 58765 Hemer (DE)

(56) Entgegenhaltungen:
- US-A1- 2010 313 958
- US-A1- 2018 143 056
- US-B2- 9 928 724

## Beschreibung

Die vorliegende Erfindung betrifft ein Verfahren zur Bestimmung von Flüssigkeitsverbräuchen einer Mehrzahl von Flüssigkeitsverbrauchern. Das Verfahren dient insbesondere der Identifikation von Flüssigkeitsverbrauchern mit einem hohen Flüssigkeitsverbrauch.

In Versorgungseinheiten, wie zum Beispiel Gebäuden, Wohnungen oder Hotelzimmern sind regelmäßig eine Vielzahl von Flüssigkeitsverbrauchern, zum Beispiel nach Art von Spülmaschinen, Waschmaschinen und/oder Toilettenspülungen oder in Form von Sanitärarmaturen zur Abgabe einer Flüssigkeit an Waschbecken, Spülbecken, Duschen und/oder Badewannen installiert. Diese Flüssigkeitsverbraucher sind regelmäßig mittels zumindest einer Flüssigkeitsleitung an ein öffentliches Flüssigkeitsversorgungsnetz angeschlossen, über das den Flüssigkeitsverbrauchern die Flüssigkeit, insbesondere Wasser, zuführbar ist. Zur Abrechnung der in einer Versorgungseinheit verbrauchten Menge der Flüssigkeit sind Verbrauchszähler bekannt, die regelmäßig im Bereich eines Flüssigkeitshauptanschlusses der jeweiligen Versorgungseinheit in der Flüssigkeitsleitung angeordnet sind. Mit diesen Verbrauchszählern ist jedoch nur ein Gesamtverbrauch der Flüssigkeit aller Flüssigkeitsverbraucher in der jeweiligen Versorgungseinheit messbar, nicht jedoch der Verbrauch der Flüssigkeit durch einen oder mehrerer bestimmter Flüssigkeitsverbraucher. Daher ist durch einen Benutzer der Flüssigkeitsverbraucher nicht überwachbar, welche Flüssigkeitsverbraucher einen besonders hohen Flüssigkeitsverbrauch verursachen. Hierdurch ist es somit nicht möglich, den Flüssigkeitsverbrauch gezielt zu optimieren bzw. zu reduzieren.

Die US9,928,724B2 beschreibt ein System mit einem Durchflusserfassungsmodul, das mit einer Fluidzufuhrleitung fluidisch verbunden ist und einen Durchflusssensor enthält, der eine Durchflussrate des durch die Fluidzufuhrleitung fließenden Fluids erfasst, sowie ein Verarbeitungselement, das mit dem Durchflusssensor und einem Benutzergerät kommuniziert. Das System dient der Erkennung von Durchflusscharakteristiken zur frühzeitigen Feststellung von Lecks und anderen nicht erwünschten Durchflussereignissen sowie zur Bereitstellung von Daten für Benutzer bezüglich Durchflusscharakteristiken und Nutzungsmustern.

Die US2018/0143056A1 beschreibt ein System, wobei von einem Wassersensor in der verteilten Wasserinfrastruktur stromaufwärts von einer Vielzahl von Geräten Signale empfangen werden, die den Wasserverbrauch anzeigen. Das System kann aus den Signalen, die den Wasserverbrauch anzeigen, eine Vielzahl von Wasserereignisprofilsignaturen konstruieren. Das System kann, basierend auf Unterschieden zwischen ähnlichen Wasserereignisprofilen, mindestens eine Wasserereignisprofilsignatur einem ersten Wasserverbraucher zuordnen und eine zweite Wasserereignisprofilsignatur einem zweiten Wasserverbraucher zuordnen. Das System kann, basierend auf dem Vergleich, ein erstes aktuelles Wasserereignisprofil dem ersten Wasserverbraucher zuordnen und ein zweites aktuelles Wasserereignisprofil dem zweiten Wasserverbraucher zuordnen.

Die US20100313958A1 führt aus, dass durch die Überwachung von Drucktransienten in einer Flüssigkeit innerhalb eines Flüssigkeitsverteilungssystems mit einem Sensor Ereignisse wie das Öffnen und Schließen von Ventilen an bestimmten Armaturen leicht erkannt werden können. Jedes derartige Ereignis kann vom Gerät identifiziert werden, indem charakteristische Merkmale der Druckübergangswellenform mit zuvor beobachteten charakteristischen Merkmalen für Ereignisse im System verglichen werden. Der Durchfluss zu jeder Armatur und Lecks im System können aus dem Drucktransientensignal ermittelt werden. Ein zweiter Sensor, der an einem vom ersten Sensor getrennten Punkt angeordnet ist, liefert weitere Ereignisinformationen.

Die vorstehend genannten Systeme und Verfahren sind teils sehr komplex und technisch aufwändig. Weiterhin gehen diese von einer besonders rechenintensiven Auswertung und Analyse aus. Daraus resultierend kann eine eindeutige Zuordnung detektierter Ereignisse nicht immer mit vertretbarem Zeit- und/oder Rechenaufwand erreicht werden.

Aufgabe der Erfindung ist es daher, die mit Bezug auf den Stand der Technik geschilderten Probleme zumindest teilweise zu lösen und insbesondere ein Verfahren zur Bestimmung von Flüssigkeitsverbräuchen einer Mehrzahl von Flüssigkeitsverbrauchern anzugeben, mit dem der Flüssigkeitsverbrauch bestimmter Flüssigkeitsverbraucher einer Versorgungseinheit bestimmbar ist.

Diese Aufgabe wird gelöst mit einem Verfahren gemäß den Merkmalen des unabhängigen Patentanspruchs. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zur Bestimmung von Flüssigkeitsverbräuchen einer Mehrzahl von Flüssigkeitsverbrauchern bei, das zumindest die folgenden Schritte aufweist:
a) Detektieren eines Flüssigkeitsverbrauchsvorgangs an einer Flüssigkeitsleitung, mittels der der Mehrzahl von Flüssigkeitsverbrauchern eine Flüssigkeit zuführbar ist;
b) Bestimmen eines Flüssigkeitsverbrauchs während des Flüssigkeitsverbrauchsvorgangs;
c) Bestimmen zumindest eines Parameters des Flüssigkeitsverbrauchsvorgangs; und
d) Zuordnen des Flüssigkeitsverbrauchs zu einer Flüssigkeitsverbraucherklasse in Abhängigkeit des zumindest einen Parameters.

In Schritt c) werden folgende Parameter zur Identifikation einer Flüssigkeitsverbraucherklasse berücksichtig:
1. ein Volumenstrom und/oder eine Strömungsdauer der Flüssigkeit durch die Flüssigkeitsleitung,
2. wenn daraus noch keine Identifizierung einer vorgegebenen Flüssigkeitsverbraucherklasse bzw. des Flüssigkeitsverbrauchers möglich ist, ein Flüssigkeitsdruck und/oder eine Steigung eines Flüssigkeitsdrucks und/oder eine Schwankung eines Flüssigkeitsdrucks der Flüssigkeit in der Flüssigkeitsleitung,
3. wenn noch keine Identifizierung einer vorgegebenen Flüssigkeitsverbraucherklasse bzw. des Flüssigkeitsverbrauchers möglich ist, ein Wochentag und/oder eine Tageszeit zur statistischen Auswertung einer Wahrscheinlichkeit der Verwendung eines bestimmten Flüssigkeitsverbrauchers.

Die Mehrzahl von Flüssigkeitsverbrauchern ist insbesondere in einer (einzigen) Versorgungseinheit, wie zum Beispiel einem Gebäude, einer Wohnung oder einem Hotelzimmer angeordnet. Den Flüssigkeitsverbrauchern ist eine Flüssigkeit, insbesondere Wasser, über eine Flüssigkeitsleitung zuführbar, die die Flüssigkeitsverbraucher insbesondere mit einem öffentlichen Flüssigkeitsversorgungsnetz verbindet. Bei den Flüssigkeitsverbrauchern kann es sich beispielsweise um Sanitärarmaturen zur Abgabe einer Flüssigkeit an Waschbecken, Spülbecken, Duschen und/oder Badewannen und/oder um Spülmaschinen, Waschmaschinen und/oder Toilettenspülungen handeln.

Jeder Flüssigkeitsverbraucher löst bei der Abgabe von Flüssigkeit bzw. bei seiner Verwendung einen Flüssigkeitsverbrauchsvorgang aus. Die jeweiligen Flüssigkeitsverbrauchsvorgänge beginnen mit der Abgabe der Flüssigkeit durch einen Flüssigkeitsverbraucher bzw. der Verwendung eines Flüssigkeitsverbrauchers und enden mit dem Ende der Abgabe der Flüssigkeit durch den Flüssigkeitsverbraucher bzw. dem Ende der Verwendung des Flüssigkeitsverbrauchers. Somit können die Flüssigkeitsverbrauchsvorgänge eine bestimmte Zeitspanne andauern. Die Flüssigkeitsverbrauchsvorgänge werden in Schritt a) an der Flüssigkeitsleitung detektiert. Hierzu kann an und/oder in der Flüssigkeitsleitung eine Messvorrichtung angeordnet sein. Die Messvorrichtung ist den Flüssigkeitsverbrauchern in der Strömungsrichtung der Flüssigkeit durch die Flüssigkeitsleitung in der Flüssigkeitsleitung insbesondere vorgeordnet, sodass durch die Messvorrichtung sämtliche Flüssigkeitsverbrauchsvorgänge der Flüssigkeitsverbraucher detektierbar sind. Der Beginn der jeweiligen Flüssigkeitsverbrauchsvorgänge ist durch die Messvorrichtung insbesondere durch einen Anstieg einer Strömungsgeschwindigkeit oder eines Anstiegs eines Volumenstroms der Flüssigkeit durch die Flüssigkeitsleitung detektierbar. Entsprechend ist das Ende der jeweiligen Flüssigkeitsverbrauchsvorgänge durch die Messvorrichtung insbesondere durch eine Reduzierung der Strömungsgeschwindigkeit oder eine Reduzierung des Volumenstroms der Flüssigkeit durch die Flüssigkeitsleitung detektierbar. Hierzu kann die Messvorrichtung beispielsweise einen Durchflusssensor zur Bestimmung der Strömungsgeschwindigkeit der Flüssigkeit durch die Flüssigkeitsleitung aufweisen. Weiterhin kann der Volumenstrom der Flüssigkeit über die Strömungsgeschwindigkeit der Flüssigkeit und eine (bekannte) Querschnittsfläche der Flüssigkeitsleitung berechnet werden, beispielsweise in m³/s (Kubikmeter pro Sekunde) oder I/min (Liter pro Minute).

In Schritt b) wird der Flüssigkeitsverbrauch während der einzelnen Flüssigkeitsverbrauchsvorgänge bestimmt. Der Flüssigkeitsverbrauch kann beispielsweise über den Volumenstrom der Flüssigkeit während des Flüssigkeitsverbrauchsvorgangs und die Zeitspanne bzw. die Dauer des Flüssigkeitsverbrauchsvorgangs berechnet werden. Durch das Bestimmen des Flüssigkeitsverbrauchs ist somit beispielsweise bekannt, wie viel Liter Flüssigkeit während des jeweiligen Flüssigkeitsverbrauchsvorgangs verbraucht wurde. Die Bestimmung des Flüssigkeitsverbrauchs kann insbesondere mit Hilfe der Messvorrichtung erfolgen.

In Schritt c) wird zumindest ein Parameter des Flüssigkeitsverbrauchsvorgangs bestimmt. Bei dem zumindest einen Parameter handelt es sich insbesondere um zumindest eine Zustandsvariable, die der Identifizierung des den Flüssigkeitsverbrauchsvorgang auslösenden Flüssigkeitsverbrauchers oder eines Typs bzw. einer Art des den Flüssigkeitsverbrauchsvorgang auslösenden Flüssigkeitsverbrauchers dienen kann. Die Bestimmung des zumindest einen Parameters kann beispielsweise mit einem System zur Datenverarbeitung, zum Beispiel nach Art einer Steuerung, erfolgen. Das System zur Datenverarbeitung kann in der Messvorrichtung oder außerhalb der Messvorrichtung ausgebildet sein. Weiterhin kann das System zur Datenverarbeitung in der Versorgungseinheit oder außerhalb der Versorgungseinheit angeordnet sein. Zudem kann das System zur Datenverarbeitung beispielsweise außerhalb der Versorgungseinheit auf einem (Cloud-)Server ausgebildet sein. Das System zur Datenverarbeitung ist insbesondere über eine Datenverbindung, beispielsweise nach Art einer Funkverbindung, Kabelverbindung und/oder Internetverbindung, mit der Messvorrichtung verbunden. Die Bestimmung des zumindest einen Parameters kann insbesondere durch eine Analyse der durch die Messvorrichtung erzeugten Messwerte erfolgen. Insbesondere können hierzu die Messwerte und/oder Verläufe der Messwerte während eines Flüssigkeitsverbrauchsvorgangs, beispielsweise deren Höhe, Steigung, Dauer und/oder statistische Kennwerte, wie zum Beispiel Mittelwerte oder Streuungsmaße, analysiert werden. Bei der Analyse der durch die Messvorrichtung erzeugten Messwerte wird insbesondere zumindest ein Parameter bestimmt, der für die jeweiligen die Flüssigkeitsverbrauchsvorgänge auslösenden Flüssigkeitsverbraucher charakteristisch ist, sodass die den jeweiligen Flüssigkeitsverbrauchsvorgang auslösenden Flüssigkeitsverbraucher über den zumindest einen Parameter des Flüssigkeitsverbrauchsvorgangs (zumindest teilweise) identifiziert werden können. Bei der Analyse wird somit insbesondere nach einem "Fingerabdruck" der verschiedenen Flüssigkeitsverbraucher gesucht, den diese während der Flüssigkeitsverbrauchsvorgänge in den Messwerten erzeugen. Die Bestimmung des zumindest einen Parameters kann somit auch statistische Verfahren umfassen.

In Schritt c) wird zunächst als Parameter ein Volumenstrom und/oder eine Strömungsdauer der Flüssigkeit durch die Flüssigkeitsleitung bestimmt werden. Bei der Strömungsdauer handelt es sich dabei insbesondere um die Zeitspanne bzw. die Dauer des Flüssigkeitsverbrauchsvorgangs. Der Volumenstrom und die Strömungsdauer der Flüssigkeit während eines Flüssigkeitsverbrauchsvorgangs können charakteristisch für bestimmte Arten von Flüssigkeitsverbrauchern sein. Zum Beispiel sind ein Volumenstrom von 3 bis 12 l/min und eine Strömungsdauer von 10 bis 50 Sekunden typisch für eine Sanitärarmatur an einem Waschbecken, ein Volumenstrom von 5 bis 12 l/min typisch für eine Toilettenspülung, ein Volumenstrom von 6 bis 12 l/min und eine Strömungsdauer von 180 bis 600 Sekunden typisch für eine Sanitärarmatur in einer Dusche sowie ein Volumenstrom von 10 bis 25 l/min und eine Strömungsdauer von 480 bis 1200 Sekunden typisch für eine Sanitärarmatur an einer Badewanne.

In Schritt c) kann als weiter Parameter ein Flüssigkeitsdruck der Flüssigkeit in der Flüssigkeitsleitung bestimmt werden. Hierzu kann die Messvorrichtung beispielsweise einen Drucksensor aufweisen. Der Flüssigkeitsdruck während eines Flüssigkeitsverbrauchsvorgangs kann charakteristisch für bestimmte Flüssigkeitsverbraucher sein. Die Bestimmung und/oder Verwendung des Flüssigkeitsdrucks als weiterer Parameter erfolgt dann, wenn die Bestimmung des Volumenstroms und/oder der Strömungsdauer der Flüssigkeit zur eindeutigen Identifizierung der Flüssigkeitsverbraucherklasse bzw. der Flüssigkeitsverbraucher nicht ausreicht.

In Schritt c) kann als Parameter eine Steigung eines Flüssigkeitsdrucks der Flüssigkeit in der Flüssigkeitsleitung bestimmt werden. Die Bestimmung der Steigung des Flüssigkeitsdrucks kann beispielsweise mit Hilfe der Messvorrichtung und/oder des Systems zur Datenverarbeitung erfolgen. Insbesondere kann die Steigung bzw. der Abfall des Flüssigkeitsdrucks am Anfang und/oder am Ende eines Flüssigkeitsverbrauchsvorgangs charakteristisch für eine Flüssigkeitsverbraucherklasse bzw. einen Flüssigkeitsverbraucher sein. Die Bestimmung und/oder Verwendung der Steigung des Flüssigkeitsdrucks erfolgt als weiterer Parameter, wenn die Bestimmung des Volumenstroms, der Strömungsdauer und/oder des Flüssigkeitsdrucks zur eindeutigen Identifizierung der Flüssigkeitsverbraucherklasse bzw. der Flüssigkeitsverbraucher nicht ausreicht.

In Schritt c) kann als Parameter eine Schwankung eines Flüssigkeitsdrucks der Flüssigkeit in der Flüssigkeitsleitung bestimmt werden. Die Druckschwankungen während eines Flüssigkeitsverbrauchsvorgangs des Flüssigkeitsdrucks können charakteristisch für bestimmte Flüssigkeitsverbraucher sein. Die Bestimmung und/oder Verwendung der Schwankungen des Flüssigkeitsdrucks erfolgt als weiterer Parameter, wenn die Bestimmung des Volumenstroms, der Strömungsdauer, des Flüssigkeitsdrucks und/oder der Steigung des Flüssigkeitsdrucks zur eindeutigen Identifizierung der Flüssigkeitsverbraucherklasse bzw. der Flüssigkeitsverbraucher nicht ausreicht.

In Schritt c) kann als Parameter ein Wochentag bestimmt werden. Der Wochentag kann als Parameter zur Identifizierung einer Flüssigkeitsverbraucherklasse bzw. eines Flüssigkeitsverbrauchers herangezogen werden, weil bestimmte Flüssigkeitsverbraucherklassen bzw. Flüssigkeitsverbraucher an bestimmten Wochentagen mit höherer Wahrscheinlichkeit verwendet werden. So werden zum Beispiel von montags bis freitags häufiger Sanitärarmaturen in Duschen und von samstags bis sonntags häufiger Sanitärarmaturen an Badewannen verwendet. Weiterhin ist der Flüssigkeitsverbrauch an Samstagen und Sonntagen insgesamt höher. Der Wochentag kann daher zur statistischen Auswertung einer Wahrscheinlichkeit der Verwendung eines bestimmten Flüssigkeitsverbrauchers und damit einer bestimmten Flüssigkeitsverbraucherklasse verwendet werden.

In Schritt c) wird als Parameter eine Tageszeit bestimmt. Beispielsweise werden von montags bis freitags morgens häufiger Toilettenspülungen, Sanitärarmaturen an Waschbecken und/oder Sanitärarmaturen in Duschen verwendet. Weiterhin werden montags bis freitags tagsüber Toilettenspülungen und Sanitärarmaturen an Waschbecken häufig mit kurzem zeitlichen Abstand verwendet. Zudem werden montags bis freitags abends häufiger Sanitärarmaturen an Duschen, zwei- bis dreimal Toilettenspülungen und/oder drei- bis viermal Sanitärarmaturen verwendet. Die Tageszeit kann daher ebenso zur statistischen Auswertung der Wahrscheinlichkeit der Verwendung eines bestimmten Flüssigkeitsverbrauchers und damit einer bestimmten Flüssigkeitsverbraucherklasse verwendet werden.

In Schritt d) wird der Flüssigkeitsverbrauch der einzelnen Flüssigkeitsverbrauchsvorgänge einer Flüssigkeitsverbraucherklasse in Abhängigkeit des zumindest einen Parameters zugeordnet. Die Flüssigkeitsverbraucherklasse wird insbesondere durch einen (einzigen) Flüssigkeitsverbraucher der Versorgungseinheit oder durch eine Mehrzahl von Flüssigkeitsverbrauchern insbesondere eines gleichen oder ähnlichen Typs bzw. einer gleichen oder ähnlichen Art gebildet. Mit anderen Worten kann jeder Flüssigkeitsverbraucher der Versorgungseinheit eine eigene Flüssigkeitsverbraucherklasse oder eine Mehrzahl von insbesondere gleichen oder ähnlichen Flüssigkeitsverbrauchern der Versorgungseinheit eine gemeinsame Flüssigkeitsverbraucherklasse bilden. Beispielsweise können alle Sanitärarmaturen an Wasch- und Spülbecken, alle Toilettenspülungen, alle Sanitärarmaturen in Duschen und/oder alle Sanitärarmaturen an Badewannen jeweils eine Flüssigkeitsverbraucherklasse bilden. Die Mehrzahl von Flüssigkeitsverbrauchern einer Versorgungseinheit bilden dabei insbesondere eine Mehrzahl von (unterschiedlichen) Flüssigkeitsverbraucherklassen. In Schritt d) erfolgt somit eine Klassifizierung der einzelnen Flüssigkeitsverbrauchsvorgänge anhand des zumindest einen Parameters und über die Klassifizierung eine Zuordnung des Flüssigkeitsverbrauchs der jeweiligen Flüssigkeitsverbrauchsvorgänge zu einer bestimmten Flüssigkeitsverbraucherklasse. Die einer bestimmten Flüssigkeitsverbraucherklasse zugeordneten Flüssigkeitsverbräuche werden insbesondere summiert. Der Schritt d) kann ebenfalls mit Hilfe des Systems zur Datenverarbeitung durchgeführt werden. Weiterhin können einem Benutzer die Flüssigkeitsverbräuche der einzelnen Flüssigkeitsverbraucherklassen bzw. der Flüssigkeitsverbraucher an der Messvorrichtung und/oder mit Hilfe des Systems zur Datenverarbeitung angezeigt werden. Hierzu kann die Messvorrichtung und/oder das System zur Datenverarbeitung beispielsweise ein Display und/oder ein Benutzerinterface aufweisen, auf das der Benutzer beispielsweise mittels eines Computers oder Smartphones zugreifen kann.

In Schritt c) kann der Parameter durch einen Flüssigkeitsverbraucher vorgegeben werden. Der Flüssigkeitsverbraucher kann sich durch den Parameter insbesondere bei dem System zur Datenverarbeitung identifizieren. Hierzu kann der Flüssigkeitsverbraucher ebenfalls über eine Datenverbindung mit dem System zur Datenverarbeitung verbunden sein. Der Flüssigkeitsverbrauch des durch den Flüssigkeitsverbraucher verursachten Flüssigkeitsverbrauchsvorgangs kann in Schritt d) hierdurch der Flüssigkeitsverbraucherklasse zugeordnet werden, der der Flüssigkeitsverbraucher angehört.

Einem weiteren Aspekt der Erfindung folgend wird auch ein System zur Datenverarbeitung vorgeschlagen, das einen Prozessor umfasst, der so konfiguriert ist, dass er das erfindungsgemäße Verfahren ausführt.

Einem noch weiteren Aspekt der Erfindung folgend wird auch ein Computerprogrammprodukt vorgeschlagen, das Befehle umfasst, die bei der Ausführung eines Programms durch einen Computer diesen veranlassen, zumindest die Schritte des erfindungsgemäßen Verfahrens auszuführen.

Bezüglich weiterer Einzelheiten des Systems und des Computerprogrammprodukts wird auf die Beschreibung des erfindungsgemäßen Verfahrens verwiesen.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Dabei sind gleiche Elemente in den Figuren mit denselben Bezugszeichen versehen. Es zeigen beispielhaft und schematisch:
- Fig. 1:: eine an einer Flüssigkeitsleitung angeordnete Vorrichtung;
- Fig. 2:: ein erstes Diagramm mit Flüssigkeitsverbrauchsvorgängen;
- Fig. 3:: ein zweites Diagramm mit einem Flüssigkeitsverbrauchsvorgang; und
- Fig. 4:: ein drittes Diagramm mit Flüssigkeitsverbrauchsvorgängen.

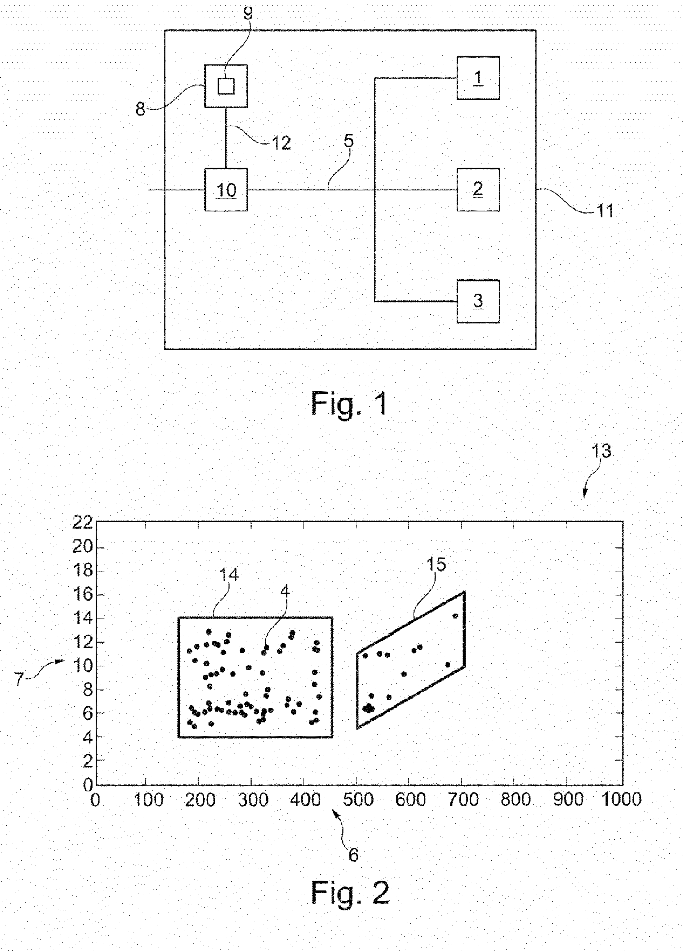

Die Fig. 1 zeigt eine Messvorrichtung 10, die an einer Flüssigkeitsleitung 5 angeordnet ist. Mit der Flüssigkeitsleitung 5 ist eine Flüssigkeit von einer hier nicht gezeigten Flüssigkeitsquelle zu einem ersten Flüssigkeitsverbraucher 1, zweiten Flüssigkeitsverbraucher 2 und dritten Flüssigkeitsverbraucher 3 führbar. Die Flüssigkeitsverbraucher 1, 2, 3 sind in der gleichen Verbrauchseinheit 11 angeordnet und bilden jeweils eine Flüssigkeitsverbraucherklasse. Mittels der Messvorrichtung 10 sind gemäß Schritt a) in der Fig. 2 gezeigte Flüssigkeitsverbrauchsvorgänge 4 detektierbar, die bei einer Benutzung der Flüssigkeitsverbraucher 1, 2, 3 ausgelöst werden. Zudem ist durch die Messvorrichtung 10 gemäß Schritt b) ein Flüssigkeitsverbrauch während der einzelnen Flüssigkeitsverbrauchsvorgänge bestimmbar. Die Flüssigkeitsverbrauchsvorgänge des ersten Flüssigkeitsverbrauchers 1, zweiten Flüssigkeitsverbrauchers 2 und dritten Flüssigkeitsverbrauchers 3 weisen für den jeweiligen Flüssigkeitsverbraucher 1, 2, 3 charakteristische Parameter 6, 7 auf (vgl. Fig. 2). Diese Parameter 6, 7 sind gemäß Schritt c) ebenfalls mit Hilfe der Messvorrichtung 10 bestimmbar. Die Messvorrichtung 10 ist über eine Datenverbindung 12 mit einem System zur Datenverarbeitung 8 verbunden, das einen Prozessor 9 umfasst. Über die Datenverbindung 12 sind durch die Messvorrichtung 10 die Flüssigkeitsverbräuche der einzelnen Flüssigkeitsverbrauchsvorgänge und die Parameter 6, 7 der einzelnen Flüssigkeitsverbrauchsvorgänge an das System zur Datenverarbeitung 8 übertragbar. Das System zur Datenverarbeitung 8 kann die Parameter 6, 7 der Flüssigkeitsverbrauchsvorgänge auswerten bzw. analysieren und hierdurch feststellen, durch welchen Flüssigkeitsverbraucher 1, 2, 3 bzw. durch welche Flüssigkeitsverbraucherklasse der jeweilige Flüssigkeitsverbrauchsvorgang 4 ausgelöst wurde. Somit sind durch das System zur Datenverarbeitung 8 gemäß Schritt d) die Flüssigkeitsverbräuche der einzelnen Flüssigkeitsverbrauchsvorgänge 4 mit Hilfe der Parameter 6, 7 den einzelnen Flüssigkeitsverbrauchern 1, 2, 3 bzw. den jeweiligen Flüssigkeitsverbraucherklassen zuordenbar. Die summierten Flüssigkeitsverbräuche der einzelnen Flüssigkeitsverbraucher 1, 2, 3 bzw. der einzelnen Flüssigkeitsverbraucherklassen können durch einen Benutzer beispielsweise über ein Benutzerinterface abgerufen werden.

Die Fig. 2 zeigt ein erstes Diagramm 13 mit einer Vielzahl von Flüssigkeitsverbrauchsvorgängen 4, die im ersten Diagramm 13 als Punkte dargestellt sind. Die Positionen der einzelnen Flüssigkeitsverbrauchsvorgänge 4 sind in dem ersten Diagramm 13 für jeden Flüssigkeitsverbrauchsvorgang 4 durch die Strömungsdauer der Flüssigkeit in Sekunden als erster Parameter 6 (horizontale X-Achse) und den Volumenstrom der Flüssigkeit in Liter pro Minute als zweiter Parameter 7 (vertikale Y-Achse) festgelegt. Die Strömungsdauer und der Volumenstrom der während der einzelnen Flüssigkeitsverbrauchsvorgänge 4 durch die in der Fig. 1 gezeigte Flüssigkeitsleitung 5 zu den jeweiligen Flüssigkeitsverbrauchern 1, 2, 3 strömenden Flüssigkeit ist in Schritt c) mit Hilfe der in der Fig. 1 gezeigten Messvorrichtung 10 bestimmbar. Durch die Position der einzelnen Flüssigkeitsverbrauchsvorgänge 4 in dem ersten Diagramm 13 sind die Flüssigkeitsverbräuche der jeweiligen Flüssigkeitsverbrauchsvorgänge 4 gemäß Schritt d) durch das in der Fig. 1 gezeigte System zur Datenverarbeitung 8 klassifizierbar und einem der Flüssigkeitsverbraucher 1, 2, 3 bzw. einer der Flüssigkeitsverbraucherklassen zuordenbar. Hierbei kann das System zur Datenverarbeitung 8 beispielsweise alle Flüssigkeitsverbräuche derjenigen Flüssigkeitsverbrauchsvorgänge 4 dem ersten Flüssigkeitsverbraucher 1 bzw. einer ersten Flüssigkeitsverbraucherklasse zuordnen, die sich im ersten Diagramm 13 in dem ersten Bereich 14 befinden. Weiterhin kann das System zur Datenverarbeitung 8 beispielsweise alle Flüssigkeitsverbraucher derjenigen Flüssigkeitsverbrauchsvorgänge 4 dem zweiten Flüssigkeitsverbraucher 2 bzw. einer zweiten Flüssigkeitsverbraucherklasse zuordnen, die sich im ersten Diagramm 13 in dem zweiten Bereich 15 befinden. Der erste Bereich 14 umfasst diejenigen Bereiche des ersten Parameters 6 und zweiten Parameters 7, die bei einem Flüssigkeitsverbrauchsvorgangs 4 für den ersten Flüssigkeitsverbraucher 1 charakteristisch sind. Entsprechend umfasst der zweite Bereich 15 diejenigen Bereiche des ersten Parameters 6 und zweiten Parameters 7, die bei einem Flüssigkeitsverbrauchsvorgang 4 für den zweiten Flüssigkeitsverbraucher 2 charakteristisch sind. Das erste Diagramm 13 kann entsprechend der Anzahl der Flüssigkeitsverbraucher 1, 2, 3 bzw. der Anzahl der Flüssigkeitsverbraucherklassen weitere Bereiche aufweisen, die in der Fig. 2 der Übersichtlichkeit halber nicht dargestellt sind. Zudem kann das System zur Datenverarbeitung 8 dazu eingerichtet sein, selbstständig weitere Bereiche zu definieren oder die Bereiche 14, 15 zu ändern, wenn beispielsweise weitere Flüssigkeitsverbraucher an die in der Fig. 1 dargestellte Flüssigkeitsleitung 5 angeschlossen oder einer der Flüssigkeitsverbraucher 1, 2, 3 ersetzt werden.

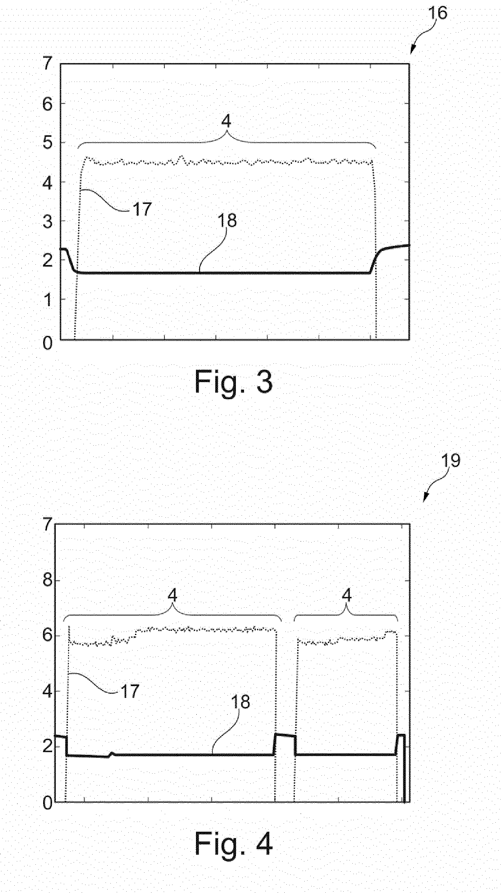

Weiterhin bestehen Anwendungsfälle, bei denen eine eindeutige Zuordnung des Flüssigkeitsverbrauchs eines Flüssigkeitsverbrauchsvorgangs 4 zu einem der Flüssigkeitsverbraucher 1, 2, 3 bzw. einer der Flüssigkeitsverbraucherklassen nicht möglich ist, weil sich die Bereiche 13, 14 beispielsweise zumindest teilweise überschneiden. In diesem Fall kann das System zur Datenverarbeitung 8 weitere Parameter der Flüssigkeitsverbrauchsvorgänge 4 bei der Zuordnung bzw. Klassifizierung im Schritt d) berücksichtigen. Beispiele hierzu sind in den Fig. 3 und 4 dargestellt.

Die Fig. 3 zeigt ein zweites Diagramm 16, in dem ein erster Graph 17 einen Volumenstrom der Flüssigkeit und ein zweiter Graph 18 einen Verlauf eines Flüssigkeitsdrucks der Flüssigkeit in der Flüssigkeitsleitung 5 während eines ersten Flüssigkeitsverbrauchsvorgangs 4 des ersten Flüssigkeitsverbrauchers 1 darstellt. Zudem zeigt die Fig. 4 ein drittes Diagramm 19, in dem der erste Graph 17 den Verlauf des Volumenstroms der Flüssigkeit und der zweite Graph 18 den Verlauf des Flüssigkeitsdrucks der Flüssigkeit in der Flüssigkeitsleitung 5 während eines zweiten Flüssigkeitsverbrauchsvorgangs 4 des zweiten Flüssigkeitsverbrauchers 2 (links dargestellt) und eines dritten Flüssigkeitsverbrauchsvorgangs 4 des dritten Flüssigkeitsverbrauchers 3 (rechts dargestellt) darstellt. Bei dem zweiten Diagramm 16 und dritten Diagramm 19 sind auf der horizontalen X-Achse die Strömungsdauer der Flüssigkeit in Sekunden und auf der vertikalen Y-Achse der Volumenstrom sowie der Flüssigkeitsdruck der Flüssigkeit aufgetragen. Der Verlauf des Volumenstroms und der Verlauf des Flüssigkeitsdrucks der Flüssigkeit in der Flüssigkeitsleitung 5 sind ebenfalls mit Hilfe der Messvorrichtung 10 bestimmbar. Zu erkennen ist in dem zweiten Diagramm 16 und dritten Diagramm 19 unter anderem, dass die Steigung bzw. das Gefälle des Flüssigkeitsdrucks der Flüssigkeit zu Beginn und/oder am Ende der einzelnen Flüssigkeitsverbrauchsvorgänge 4 der Flüssigkeitsverbraucher 1, 2, 3 voneinander abweichen und dass die Schwankungen des Volumenstroms und/oder des Flüssigkeitsdrucks während der einzelnen Flüssigkeitsverbrauchsvorgänge 4 der Flüssigkeitsverbraucher 1, 2, 3 unterschiedlich sind. Diese können daher in Schritt d) durch das System zur Datenverarbeitung 8 als weitere Parameter zur Identifikation der Flüssigkeitsverbraucher 1, 2, 3 bzw. zur Zuordnung des Flüssigkeitsverbrauchs der einzelnen Flüssigkeitsverbrauchsvorgänge 4 zu dem jeweiligen Flüssigkeitsverbraucher 1, 2, 3 bzw. der jeweiligen Flüssigkeitsverbraucherklassen verwendet werden.

Durch die vorliegende Erfindung ist der Flüssigkeitsverbrauch bestimmter Flüssigkeitsverbraucherklassen bzw. bestimmter Flüssigkeitsverbraucher einer Versorgungseinheit separat bestimmbar.

### Bezugszeichenliste

- 1: erster Flüssigkeitsverbraucher
- 2: zweiter Flüssigkeitsverbraucher
- 3: dritter Flüssigkeitsverbraucher
- 4: Flüssigkeitsverbrauchsvorgang
- 5: Flüssigkeitsleitung
- 6: erster Parameter
- 7: zweiter Parameter
- 8: System zur Datenverarbeitung
- 9: Prozessor
- 10: Messvorrichtung
- 11: Versorgungseinheit
- 12: Datenverbindung
- 13: erstes Diagramm
- 14: erster Bereich
- 15: zweiter Bereich
- 16: zweites Diagramm
- 17: erster Graph
- 18: zweiter Graph
- 19: drittes Diagramm

## Patentansprüche

1. Verfahren zur Bestimmung von Flüssigkeitsverbräuchen einer Mehrzahl von Flüssigkeitsverbrauchern (1, 2, 3), aufweisend zumindest die folgenden Schritte:
a) Detektieren eines Flüssigkeitsverbrauchsvorgangs (4) an einer Flüssigkeitsleitung (5), mittels der der Mehrzahl von Flüssigkeitsverbrauchern (1, 2, 3) eine Flüssigkeit zuführbar ist;
b) Bestimmen eines Flüssigkeitsverbrauchs während des Flüssigkeitsverbrauchsvorgangs (4);
c) Bestimmen zumindest eines Parameters (6, 7) des Flüssigkeitsverbrauchsvorgangs (4); und
d) Zuordnen des Flüssigkeitsverbrauchs zu einer Flüssigkeitsverbraucherklasse in Abhängigkeit des zumindest einen Parameters (6, 7),
**dadurch gekennzeichnet, dass** Schritt c) folgende Parameter zur Identifikation einer Flüssigkeitsverbraucherklasse berücksichtig:
1. ein Volumenstrom und/oder eine Strömungsdauer der Flüssigkeit durch die Flüssigkeitsleitung,
2. wenn daraus noch keine Identifizierung einer vorgegebenen Flüssigkeitsverbraucherklasse bzw. des Flüssigkeitsverbrauchers möglich ist, ein Flüssigkeitsdruck und/oder eine Steigung eines Flüssigkeitsdrucks und/oder eine Schwankung eines Flüssigkeitsdrucks der Flüssigkeit in der Flüssigkeitsleitung (5),
3. wenn daraus noch keine Identifizierung einer vorgegebenen Flüssigkeitsverbraucherklasse bzw. des Flüssigkeitsverbrauchers möglich ist, ein Wochentag und/oder eine Tageszeit zur statistischen Auswertung einer Wahrscheinlichkeit der Verwendung eines bestimmten Flüssigkeitsverbrauchers.

2. Verfahren nach dem vorhergehenden Patentanspruch, wobei in Schritt c) der Parameter (6, 7) durch einen Flüssigkeitsverbraucher (1, 2, 3) vorgegeben wird.

3. System zur Datenverarbeitung (8), umfassend einen Prozessor (9), der so konfiguriert ist, dass er das Verfahren nach einem der Patentansprüche 1 oder 2 ausführt.

4. Computerprogrammprodukt, umfassend Befehle, die bei der Ausführung eines Programms durch einen Computer diesen veranlassen, zumindest die Schritte eines der Verfahren nach einem der Patentansprüche 1 oder 2 auszuführen.

## Claims

1. A method for determining liquid consumption of a plurality of liquid consumers (1, 2, 3), comprising at least the following steps:
a) detecting a liquid consumption process (4) on a liquid line (5) by means of which a liquid can be supplied to the plurality of liquid consumers (1, 2, 3);
b) determining a liquid consumption during the liquid consumption process (4);
c) determining at least one parameter (6, 7) of the liquid consumption process (4); and
d) associating the liquid consumption with a liquid consumption class in dependence on the at least one parameter (6, 7),
**characterized in that** step c) considers the following parameters for identification of a liquid consumer class:
1. a volume flow and/or a flow duration of the liquid through the liquid line,
2. if it is not yet possible to identify a predetermined liquid consumer class or the liquid consumer therefrom, a liquid pressure and/or a gradient of a liquid pressure and/or a fluctuation of a liquid pressure of the liquid in the liquid line (5),
3. if it is not yet possible to identify a predetermined liquid consumer class or the liquid consumer therefrom, a day of the week and/or a time of the day for the statistical evaluation of a probability of the use of a specific liquid consumer.

2. The method according to the preceding claim, wherein in step c) the parameter (6, 7) is predetermined by a liquid consumer (1, 2, 3).

3. A system for data processing (8), comprising a processor (9) configured to carry out the method according to any one of claims 1 or 2.

4. A computer program product, comprising instructions which, when a program is carried out by a computer, cause the computer to carry out at least the steps of one of the methods according to any one of claims 1 or 2.

## Revendications

1. Procédé, destiné à déterminer des consommations de liquide d'une multiplicité de consommateurs de liquide (1, 2, 3), comportant au moins les étapes suivantes, consistant à :
a) détecter un processus de consommation de liquide (4) sur une conduite de liquide (5), au moyen duquel un liquide peut être alimenté vers la multiplicité de consommateurs de liquide (1, 2, 3) ;
b) déterminer une consommation de liquide pendant le processus de consommation de liquide (4) ;
c) déterminer au moins un paramètre (6, 7) du processus de consommation de liquide (4) ; et
d) affecter la consommation de liquide à une classe de consommateur de liquide, en fonction de l'au moins un paramètre (6, 7),
**caractérisé en ce que** l'étape c) prend en compte les paramètres suivants pour l'identification d'une classe de consommateur de liquide :
1. un débit volumétrique et / ou une durée d'écoulement du liquide à travers la conduite de liquide,
2. si à partir de celui-ci, il n'est pas encore possible d'identifier une classe prédéfinie de consommateur de liquide ou le consommateur de liquide, une pression du liquide et / ou une augmentation d'une pression du liquide et / ou une fluctuation d'une pression de liquide du liquide dans la conduite de liquide (5),
3. si à partir de celui-ci, il n'est pas encore possible d'identifier une classe prédéfinie de consommateur de liquide ou le consommateur de liquide, un jour de la semaine et / ou une heure dans la journée, pour l'évaluation statistique d'une probabilité de l'utilisation d'un certain consommateur de liquide.

2. Procédé selon la revendication précédente du brevet, dans l'étape c), le paramètre (6, 7) étant prédéfini par un consommateur de liquide (1, 2, 3).

3. Système de traitement de données (8), comprenant un processeur (9), qui est configuré de sorte à exécuter le procédé selon l'une quelconque des revendications 1 ou 2 du brevet.

4. Produit de programme informatique, comprenant des instructions, qui lors de l'exécution d'un programme par un ordinateur, incite celui-ci à exécuter au moins les étapes de l'un des procédés selon l'une quelconque des étapes 1 ou 2 du brevet.
